# EUROPÄISCHE PATENTSCHRIFT

(11) **EP 0 786 403 B1**
(45) Veröffentlichungstag und Bekanntmachung des Hinweises auf die Patenterteilung: **27.10.1999**
(21) Anmeldenummer: 97100748.9
(22) Anmeldetag: 18.01.1997
(51) Int. Cl.: B64D 5/00

(54) **Vorrichtung zum Absetzen und Wiederaufnehmen einer Drohne**
Drone launching and retrieval device
Dispositif pour le largage et la récupération de drones

(30) Priorität: 27.01.1996 DE 19602890
(43) Veröffentlichungstag der Anmeldung: 30.07.1997
(73) Patentinhaber: DaimlerChrysler AG, 70567 Stuttgart (DE)
(72) Erfinder: Karg, Josef, Ing., 89059 Kolbermoor (DE)
(74) Vertreter: Baum, Wolfgang, Dipl.-Ing.

(56) Entgegenhaltungen:
- GB-A- 546 587
- US-A- 3 088 693
- US-A- 3 520 502

## Beschreibung

Die Erfindung betrifft eine Vorrichtung zum Absetzen und Wiederaufnehmen einer Drohne von einem Transportflugzeug während des Fluges.

Es ist bekannt, Drohnen mit Raketen, durch Flugzeugabwurf oder mit eigenem Triebwerk zu starten; letzteres setzt das Vorhandensein eines Fahrwerkes voraus. Die Landung erfolgt entweder auf dem Fahrwerk oder durch Entfalten von einem oder mehreren Fallschirmen.

Aus der US-A- 3 520 502 ist eine Vorrichtung zum Absetzen und Wiederaufnehmen einer Drohne von einem Transportflugzeug während des Fluges bekannt, die einen Kran zum Befestigen der Drohne an einem Fesselungskopf aufweist. Dabei ist dieser Kran im Flugzeug angeordnet und durch Heckklappen aus dem Flugzeug ausschwenkbar. Diese Vorrichtung weist eine V-förmige Achse auf, die einen an der aufzunehmenden Drohne vorgesehenen Haken aufnimmt, um bei der Wiederaufnahme der Drohne diese in bezug auf die Vorrichtung zu zentrieren. Mit dieser Anordnung aus Haken und Achse gelingt es jedoch nicht, die Drohne in der Vorrichtung in bezug auf Drehungen um die Gierachse der Drohne ausreichend zu stabilisieren. Außerdem ist mit dieser Vorrichtung eine zuverlässige Aufnahme einer fliegenden Drohne durch die Vorrichtung im Fluge nicht gewährleistet.

Zur Aufnahme eines Flugzeugs durch ein anderes Flugzeug ist in der GB-A-546 587 eine Führungsstange beschrieben, die an der Oberseite des aufzunehmenden Flugzeugs angebracht ist. Diese Führungsstange dient dazu, das Flugzeug an eine Haltevorrichtung eines anderen Flugzeugs zu hängen, solange letzteres am Boden steht.

Der Erfindung liegt die Aufgabe zugrunde, sowohl das Starten als auch das Landen einer Drohne mit Hilfe eines Transportflugzeuges durchzuführen.

Diese Aufgabe wird durch die im Anspruch 1 gekennzeichneten Merkmale gelöst. Vorteilhafte Ausgestaltungen der Erfindung sind in den Unteransprüchen gekennzeichnet.

Die Vorrichtung hat dadurch, daß mit ihrer Hilfe eine Drohne von einem Transportflugzeug sowohl abgesetzt als auch wieder aufgenommen werden kann, für die Drohne mehrere Vorteile. Die Drohne braucht kein Fahrwerk und keine Fallschirmeinrichtungen. Die Tragflächen der Drohne können, weil sie nur bei hoher Geschwindigkeit fliegt, entsprechend klein gehalten werden, und Landehilfen, wie z.B. Landeklappen, sind nicht erforderlich.

Die Erfindung wird nachstehend anhand der Zeichnung näher erläutert. Es zeigen:
- Fig. 1: eine Längsansicht einer Vorrichtung zum Absetzen und Wiederaufnehmen einer Drohne, eingebaut in ein Transportflugzeug, in den beiden Endstellungen;
- Fig. 2: eine Seitenansicht der Vorrichtung nach Fig. 1 beim Ausschwenken aus dem Transportflugzeug in der höchsten Schwenkstellung;
- Fig. 3: eine Längsansicht der Drohne mit eingeklappter Führungsstange;
- Fig. 4: die Drohne mit ausgeklappter Führungsstange kurz vor dem Einfahren in einen am oberen Kranarm der Vorrichtung angebrachten Fesselungskopf und
- Fig. 5: die Struktur des Fesselungskopfes.

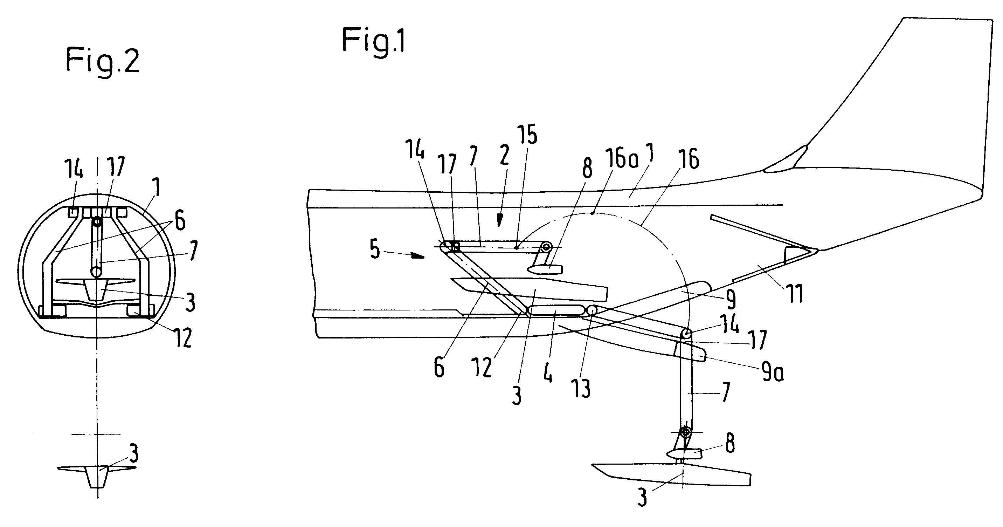

Fig. 1 zeigt das Innere eines Transportflugzeuges 1, in dem eine Vorrichtung 2 zum Absetzen und Wiederaufhehmen einer Drohne 3 eingebaut ist. Die Vorrichtung 2 ist im Flugzeug 1 auf der Bodenstruktur gelagert und besteht aus einer Bodenschiene 4, einem Kran 5 mit zwei unteren Armen 6 (siehe Fig. 2) und einem oberen Arm 7 sowie aus einem an dem Kran 5 befestigten Fesselungskopf 8, in den die Drohne 3 einfahrbar und befestigbar ist. Die Arme 6 und 7 des Krans 5 sind so zueinander beweglich ausgebildet, daß sie nach dem Öffnen von Heckklappen 9 und 11 aus dem Flugzeug 1 ein- und ausfahren können und dabei auch die nötige Freiheit fuhr die Drohne 3 gewährleisten. Die Fig. 1 zeigt die beiden Endstellungen der Vorrichtung 2, und zwar zum einen eingeschwenkt im Flugzeug 1 und zum anderen nach dem vollständigen Ausschwenken aus dem Flugzeug. Wenn eine Drohne 3 abgesetzt werden soll, bewegt sich der Kran 5 mit seinen unteren Armen 6 auf der Bodenschiene 4 vom Punkt 12 zum Punkt 13. Dabei wird ein zwischen den Armen 6 und 7 befindlicher Gelenkpunkt 14 in Richtung nach dem Punkt 15 verschoben. Beim Ausschwenken der Drohne 3 bewegt sich der Gelenkpunkt 14 vom Punkt 15 auf einem Kreisbogen 16 bis er die gezeigte Endstellung erreicht hat. In der Heckklappe 9 ist zum Aufnehmen des oberen Armes 7 ein Ausschnitt 9a vorhanden.

In der Seitenansicht nach Fig. 2 ist die Vorrichtung 2 beim Ausschwenken in der obersten Stellung 16a des Kreisbogens 16 dargestellt. Man erkennt, daß direkt unterhalb des Gelenkpunktes 14 noch ein zweites Gelenk 17 vorhanden ist, das eine Bewegung des oberen Armes 7 und damit des Fesselungskopfes 8 in einer Ebene quer zur Längsrichtung der Vorrichtung 2 bzw. des Flugzeuges 1 erlaubt. Damit soll das Einfahren der Drohne 3 in den Fesselungskopf 8 erleichtert werden.

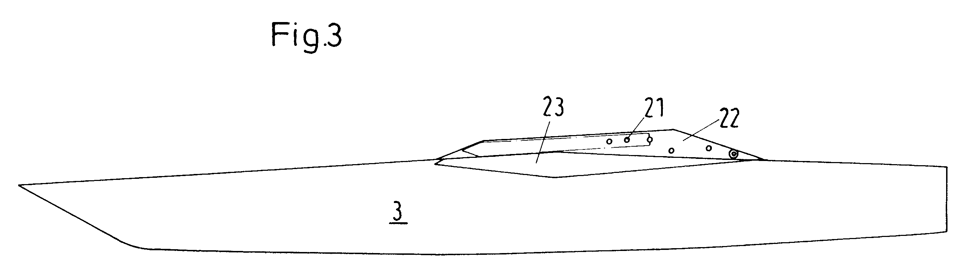

In Fig. 3 ist die Drohne 3 während des Fluges dargestellt. Dabei ist eine Führungsstange 21, deren Funktion weiter unten erläutert wird, eingefahren und durch Abdeckklappen 22 gesichert. Weiterhin sind noch Tragflächen 23 ersichtlich.

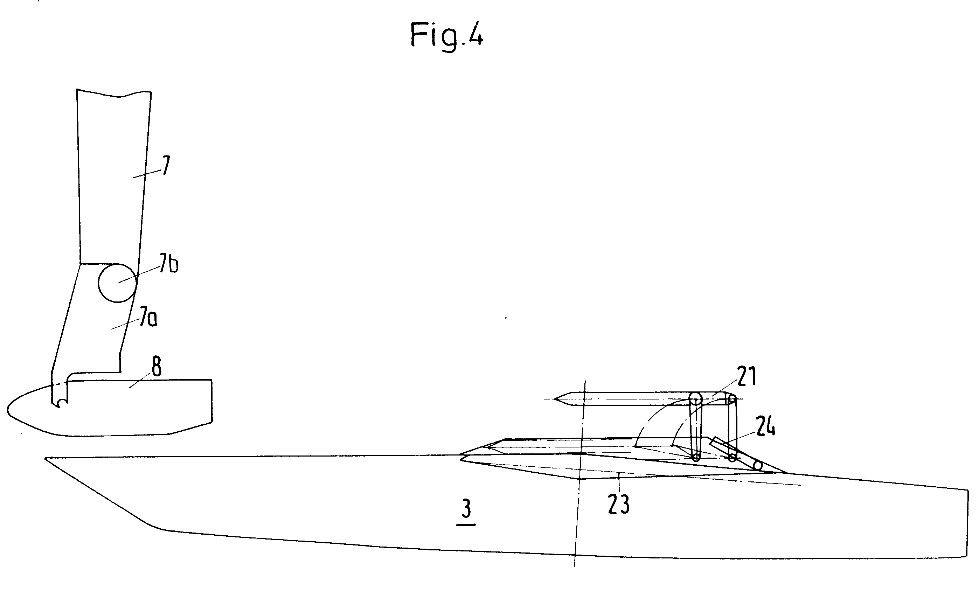

Fig. 4 zeigt die Drohne 3 in Andockposition an den Fesselungskopf 8. Dabei sind die Abdeckklappen 22, die hier der Übersichtlichkeit halber nicht gezeigt sind, geöffnet und die Führungsstange 21 aus der gestrichelt dargestellten eingefahrenen Stellung nach oben ausgefahren. Durch eine strichpunktierte Linie 23 sind Schienen angedeutet, die auf der Drohne 3 seitlich der Führungsstange 21 angebracht sind und der Verriegelung mit dem Fesselungskopf 8 dienen. Die Führungsstange 21 wird z.B. in nicht dargesellter Weise über eine magnetbetätigte Klinke durch einen Federkörper 24 in die ausgefahrene Position gebracht und dort verriegelt. Der Vorgang erfolgt ohne Energiezufuhr aus der Drohne 3. Der Fesselungskopf 8 wird an einem drehbaren Ansatz 7a mit dem Drehpunkt 7b am oberen Kranarm 7 gehalten.

Der Vorgang des Andockens und der Wiederaufnahme der Drohne 3 in das Flugzeug 1 erfolgt folgendermaßen: Die Drohne 3 ist nach dem Absetzen und nach der Erledigung ihrer Aufgabe zu einem vorgegebenen Zeitpunkt zurückgekehrt. Das Flugzeug 1 ist rechtzeitig am Zielort und Fährt den Kran 2 mit dem Fesselungskopf 8 aus. Das Flugzeug 1 wird dabei in einem großen Abstand vor die Drohne 3 geführt, wobei es z.B. mit GPS gesteuert wird. Das Flugzeug 1 fliegt konstant mit der Andockgeschwindigkeit. Die Drohne 3 fliegt von hinten auf das Flugzeug zu, gesteuert z.B. durch Differenzsignale, die vom Flugzeug zur Drohne gesendet werden (oder durch Differencial-GPS). Wenn sich die Drohne 3 in einem bestimmbaren Abstand vor dem Fesselungskopf 8 befindet, wird durch ein vorprogrammiertes Signal in der Drohne 3 die Führungsstange 21 ausgefahren. Kurz vor der Annäherung der Drohne 3 an den Fesselungskopf 8 wirken weitere Differenzsignale auf das Triebwerk und die Steuerflächen der Drohne 3 zur Verminderung ihrer Geschwindigkeit und zum Hin-führen an den Fesselungskopf 8 bis zum Einfahren der Führungsstange 21 in einen Trichter des Fesselungskopfes 8, wobei der Fesselungskopf auf die Führungsstange ausgerichtet wird. Diese Differenzsignale erfolgen durch ein zwischen dem Fesselungskopf 8 und der Führungsstange 21 vorhandenes Regelungssystem mit Sensoren. Nach dem fertigen Andocken wird die Flugregelung der Drohne abgeschaltet, das Triebwerk abgestellt und die Drohne 3 in ihrer Mittellage zentriert. Der gesamte Fesselungskopf 8 mit eingehängter und verriegelter Drohne 3 kann dann vom Kran 5 auf einer vorgegebenen Bahn in das Flugzeug 1 eingeschwenkt werden.

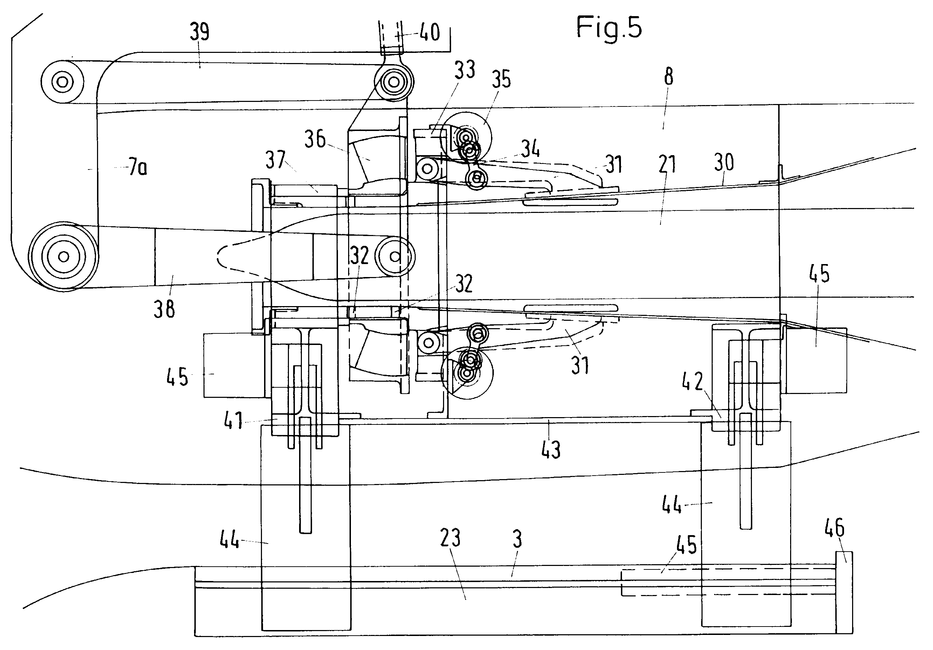

Fig. 5 zeigt die Struktur des Fesselungskopfes 8 mit Klauen zur Befestigung der Drohne 3 und bei eingefahrener Führungsstange 21. Das Einfahren der Führungsstange 21 in den Trichter 30 wird durch zwei Zentrierarme 31 und durch Näherungsschalter 32 unterstützt. Die Zentrierarme 31 sind an einer Tragplatte 33 angelenkt, über eine Totlagen-Kinematik 34 betätigt und jeweils von einem hydraulischen Drehmotor 35 angetrieben. Der Außenring 36 eines Elastoflexlagers 37 für den Trichter 30 ist an Parallelogrammarmen, die aus einem Tragarm 38 und einem weiteren Arm 39 bestehen, aufgehängt. Die Parallelogrammarme 38 und 39 sind in dem Ansatz 7a des oberen Kranarmes 7 gelagert und können von einem Stellzylinder 40 bewegt werden, um das Einführen der Führungsstange 21 in den Trichter 30 zu erleichtern. Die Struktur des Fesselungskopfes 8 weist zwei Tragspante 41 und 42 auf, die durch eine halbrunde Schale 43 verbunden sind. An den beiden Tragspanten 41 und 42 sind jeweils zwei Klauen 44 gelagert, die in hier nicht dargestellter Weise um die Schienen 23 der Drohne 3 greifen und diese verriegeln können. Fürjede Klaue 44 ist ein hydraulischer Drehmotor 45 vorgesehen. In die Schienen 23 sind Dämpfer 45 integriert, die die Drohne 3 über die Klauen 44 abbremsen, falls die Drohne 3 nicht vorher infolge der Reibung relativ zum Fesselungskopf 8 bereits abgebremst ist. Am Ende der Dämpfer 45, die hier schematisch gestrichelt angedeutet sind, ist ein Dämpfer-Anschlag 46 vorhanden.

## Patentansprüche

1. Vorrichtung zum Absetzen und Wiederaufnehmen einer Drohne von einem Transportflugzeug während des Fluges,
mit einem im Flugzeug (1) anzuordnenden, durch Heckklappen (9, 11) aus dem Flugzeug ausschwenkbaren Kran (5), an dem zum Befestigen der Drohne (3) ein Fesselungskopf (8) montiert ist, **dadurch gekennzeichnet,**
daß eine an der Drohne (3) anzuordnende ausklappbare Führungsstange (21), die in einen im Fesselungskopf (8) eingebauten Trichter (30) einfahrbar ist, und an der Drohne (3) anzuordnenden Schienen (23) vorgesehen sind, um die am Trichter (30) angebaute Klauen (44) greifen können, und
daß im Flugzeug (1) und in der Drohne (3) anzuordnende Sensoren vorgesehen sind und im Fesselungskopf (8) Sensoren vorhanden sind, welche die Drohne (3) zum Wiederaufnehmen an den Fesselungskopf (8) heranfuhren und in den Trichter (30) einführen.

2. Vorrichtung nach Anspruch 1, **dadurch gekennzeichnet,** daß der Kran (5) auf einer Bodenschiene (4) fahrbar ist, die an der Bodenstruktur des Flugzeuges (1) befestigbar ist, und sein Ausleger zwei zueinander bewegliche Arme (6, 7) aufweist.

3. Vorrichtung nach Anspruch 2, **dadurch gekennzeichnet,** daß der obere Arm (7) des Kranes (5), der den Fesselungskopf (8) trägt, unterhalb eines Gelenkes (14), mit dem er mit dem unteren Arm (6) verbunden ist, ein zweites Gelenk (17) aufweist, welches eine Bewegung quer zur Achsrichtung des Kranes (5) zuläßt, wodurch der Fesselungskopf (8) eine seitliche Bewegung ausführen kann.

4. Vorrichtung nach Anspruch 1, **dadurch gekennzeichnet,** daß der Trichter (30) des Fesselungskopfes (8) in einem Elastoflexlager (37) um etwa ± 5° drehbar aufgehängt ist und zum Einführen der Führungsstange (21) Zentrierarme (31) und Näherungsschalter (32) aufweist.

5. Vorrichtung nach Anspruch 4, **dadurch gekennzeichnet,** daß das Elastoflexlager (37) einen Außenring (36) aufweist, der an Parallelogrammarmen (38, 39) aufgehängt ist, die das Lager (37), angetrieben durch einen Stellzylinder (40), einen bestimmten Betrag nach oben und unten bewegen können.

## Claims

1. Device for launching and retrieving a drone from a transport aircraft during flight,
having a crane (5) which is to be arranged in the aircraft (1) and which can be swung out of the aircraft through tailgates (9, 11), on which crane a fixing head (8) is mounted for securing the drone (3), characterized in that
a guide rod (21) which is to be arranged on the drone (3), can be swung out and can be introduced into a funnel (30) installed in the fixing head (8), and rails (23) to be arranged on the drone (3) are provided, around which rails claws (44) mounted on the funnel (30) can grip, and
in that sensors to be arranged in the aircraft (1) and in the drone (3) are provided and sensors are present in the fixing head (8) which guide the drone (3) for retrieval on to the fixing head (8) and guide it into the funnel (30).

2. Device according to claim 1, characterized in that the crane (5) is movable on a ground rail (4) which can be secured to the ground structure of the aircraft (1), and its beam has two arms (6, 7) which are movable with respect to each other.

3. Device according to claim 2, characterized in that the upper arm (7) of the crane (5) which supports the fixing head (8), below a joint (14) by which it is connected to the lower arm (6), has a second joint (17) which permits a movement at right angles to the axial direction of the crane (5), whereby the fixing head (8) can carry out a lateral movement.

4. Device according to claim 1, characterized in that the funnel (30) of the fixing head (8) is rotatably suspended in an elastoflex support (37) by about ± 5° and has centring arms (31) and proximity switches (32) for guiding the guide rod (21) in.

5. Device according to claim 4, characterized in that the elastoflex support (37) has an outer ring (36) which is suspended on parallelogram arms (38, 39) which can move the support (37) a certain amount upwards and downwards, driven by an operating cylinder (40).

## Revendications

1. Dispositif destiné au largage et à la récupération d'un drone par un avion de transport en cours de vol,
comportant une grue (5) pouvant être disposée dans un avion (1), qui peut être pivotée hors de l'avion par des hayons arrière (9, 11), sur laquelle est montée une tête d'amarrage (8) destinée à la fixation du drone (3), caractérisé en ce que
il est prévu une tige de guidage (21) pouvant être sortie à disposer sur le drone (3), qui peur être rentrée dans une trémie (30) incorporée dans la tête d'amarrage (8), et des rails (23) pouvant être disposés sur le drone (3), qui peuvent être enserrés pas des mâchoires (44) montées sur la trémie (30), et
en ce qu'il est prévu des capteurs pouvant être disposés dans l'avion (1) et dans le drone (3), et que des capteurs sont prévus dans la tête d'amarrage (8), lesquels approchent le drone (3) de la tête d'amarrage (8) pour la récupération et l'introduisent dans la trémie (30).

2. Dispositif selon la revendication 1, caractérisé en ce que la grue (5) peut se déplacer sur un rail de plancher (4) pouvant être fixé sur la structure de planches de l'avion (1), et en ce que sa flèche comporte deux bras (6, 7) qui sont mobiles l'un par rapport à l'autre.

3. Dispositif selon la revendication 2, caractérisé en ce que le bras supérieur (7) de la grue (5), qui porte la tête d'amarrage (8), comporte au-dessous d'une articulation (14) par laquelle il est relié au bras inférieur (6), une deuxième articulation (17) qui permet un déplacement transversalement à la direction axiale de la grue (5), ce qui permet à la tête d'amarrage (8) d'effectuer un déplacement latéral.

4. Dispositif selon la revendication 1, caractérisé en ce que la trémie (30) de la tête d'amarrage (8) est accrochée dans un palier élastoflex (37) de façon à pouvoir tourner de l'ordre de ± 5°, et comporte des bras de centrage (31) et des détecteurs de proximité (32) pour l'insertion de la tige de guidage (21).

5. Dispositif selon la revendication 4, caractérisé en ce que le palier élastoflex (37) comporte une bague extérieure (36) qui est accrochée à des bras (38, 39) d'un parallélograme, lesquels peuvent déplacer le palier (37) entraîné par un vérin (40) d'une certaine valeur vers le haut ou vers le bas.
